# EUROPÄISCHE PATENTANMELDUNG

(11) **EP 4 054 152 A1**
(43) Veröffentlichungstag der Anmeldung: **07.09.2022**
(21) Anmeldenummer: 22160113.1
(22) Anmeldetag: 04.03.2022
(51) Int. Cl.: H04L 43/08, G01R 31/68, H04B 3/46

(54) **NETZWERKMODUL**

(30) Priorität: 05.03.2021 DE 102021202155
(71) Anmelder: Maurer, Sören, 78351 Bodman-Ludwigshafen (DE); Ruprecht, Dominik, 78351 Bodman (DE)
(72) Erfinder: Ruprecht, Dominik, 78351 Bodman (DE)
(74) Vertreter: Dr. Weitzel & Partner

(57) **Zusammenfassung**

Die Erfindung betrifft ein Netzwerkmodul (2) mit zumindest einem Eingangs-Port (2.1), einem Ausgangs-Port (2.2) und wenigstens einer Elektronikschaltung (5), wobei die Elektronikschaltung (5) dazu eingerichtet ist eine Netzwerkkommunikation zwischen Eingangs- und Ausgangsport (2.1, 2.2) zu unterbrechen.

Die Erfindung ist gekennzeichnet durch die folgenden Merkmale:
die Elektronikschaltung (5) ist zumindest zwischen einen Eingangs- und Ausgangsport (2.1, 2.2) zwischengeschaltet und eingerichtet für das Überwachen eines die Elektronikschaltung (5) durchfließenden Ruhestroms, um bei einer Veränderung des Ruhestroms die Netzwerkkommunikation zu unterbrechen;
ein von der Elektronikschaltung (5) ausgebildeter Stromkreis verläuft abschnittsweise durch ein an einen Eingangs-Port (2.1) oder einen Ausgangs-Port (2.2) angeschlossenes Netzwerkkabel (6);
der ausgebildete Stromkreis ist derart gestaltet, dass er im Netzwerkmodul (2) eine Ruhestromüberwachung der Netzwerkleitung realisiert.

## Beschreibung

Die Erfindung betrifft ein Netzwerkmodul als Zugriffsschutz bei der Verwendung von Verbindungen von Netzwerkkomponenten.

### Stand der Technik

Auf die folgenden Druckschriften wird verwiesen:
D1 Firmenschrift: "Meinert, Ulrich; Beck, Martin; Baudisch, Peter: Produktbeschreibung. In: Baudisch Electronic GmbH. 73116 Wäschenbeuren: LAN-Secure Adapter 33-0216, Produktbeschreibung, Version 1.0, Stand 18.10.20211, Baudisch Electronic GmbH. 73116 Wäschenbeuren, https://www.baudisch.com/wp-content/uploads/2017/08/Handbuch_LAN-Secure-Adapter.pdf.

Aus der Zeichnung auf Seite 6 der Firmenschrift geht hervor, dass die Leitung Sabo 1und Sabo 2 die Ruhestromüberwachung als separate Leitung außerhalb der LAN-Schnittstelle ausgeführt ist.

Weiterer Stand der Technik ergibt sich aus DE 102 42 534 A1 (D2) sowie JP 2009 122 053 8 (D3).

LAN-Verbindungen werden nach derzeitigem Stand durch verschiedene softwareseitige oder mechanische Schutzmaßnahmen vor ungewolltem Zugriff geschützt.

Bei LAN-Netzwerken wird insbesondere Augenmerk auf softwareseitigen Schutz gelegt. Der Zugriffsschutz wird aktuell weitestgehend über komplexe

Softwaremaßnahmen umgesetzt. Zu diesem Zweck sind folgende Schutzmaßnahmen gebräuchlich:
Die IP-Adress-Filterung wird in vielen Netzwerken verwendet. Sie stellt eine eindeutige Verbindung zwischen Router und Netzwerkteilnehmer über dessen IP-Adresse her.

Die MAC-Adress-Filterung stellt entsprechend eine eindeutige Verbindung zwischen Router und Netzwerkteilnehmer über dessen MAC-Adresse her.

Die Verwendung von Firewalls, welche in Verbindungen zu externen Netzwerken, typischerweise dem Internet, verwendet werden, findet in *Local Area Networks* keine Anwendung.

Die Verwendung von *Virtual Local Area Networks* (V-LAN) kann zudem zur Abgrenzung einzelner Netzwerke verwendet werden.

Die genannten Schutzmaßnahmen bieten alle einen rein softwareseitigen Schutz. Expertenwissen ist zur Installation und Verwaltung notwendig.

Auch mechanischer Schutz der Netzwerk- Verbindungen ist möglich. Ein mechanischer Verschluss offener Netzwerk-Ports bspw. durch Stecker mit Schließmechanismus (u.a. auch mit Schlüssel) ist hier gebräuchlich.

Auch mechanische Elemente zum Verschluss von bestehenden Netzwerkkabeln innerhalb eines Netzwerk-Ports sind in Verwendung. Sie verhindern mechanisch einen Zugriff auf Netzwerke durch die Vermeidung des "Abziehens" der Netzwerkverbindung.

Ferner sind spezielle Switches bekannt, welche neben Netzwerkanschlüssen auch separate Sabotageschleifen aufweisen, wobei nach einer Sabotage einer Sabotageschleife eine Netzwerkkommunikation zwischen den Netzwerkanschlüssen unterbrochen wird. Mit Hilfe einer Sabotageschleife lässt sich ein Zustand eines Tasters überwachen. Hierdurch lässt sich beispielsweise das Öffnen oder Entfernen einer Abdeckplatte eines Schaltschranks, in welchem der Switch angeordnet ist, erkennen. Mit Hilfe von Relaiskontakten können zudem Meldungen ausgegeben werden, beispielsweise eine an ein Gebäudeleitsystem ausgegebene Meldung über einen Zugriff auf den Switch oder ein Power-Off Signal zur Abschaltung eines Geräts. Der Switch kann auch aus der Ferne in seinen ursprünglichen Betriebszustand zurückversetzt werden. Ein solcher Switch ist beispielsweise durch den Baudisch.LAN-SecureSwitch der Firma Baudisch Electronic GmbH bekannt. Das Vorsehen und eine korrekte Installation des Tasters ist jedoch mit Aufwand verbunden, was die Sicherung des Netzwerks verkompliziert. Zudem lässt sich aufgrund der Verwendung von Tastern ein

Netzwerk nur sichern, wenn der Switch von einem Gehäuse mit verschließbarer Öffnung umschlossen ist.

### Offenbarung der Erfindung

Es ist die Aufgabe der vorliegenden Erfindung, das Risiko eines externen Netzwerkzugriffs durch offene Netzwerk-Ports oder das verwenden vorhandener und mit einem *Local Area Network* verbundenen Netzwerkkabel zu reduzieren.

Erfindungsgemäß wird diese Aufgabe durch Vorsehen eines Netzwerkmoduls mit den Merkmalen des Anspruchs 1 in einer Netzwerkkommunikation eines *Local Area Network* gelöst*.* Vorteilhafte Ausgestaltungen und Weiterbildungen ergeben sich aus den hiervon abhängigen Ansprüchen.

Die Erfindung basiert auf dem Überwachen eines die Elektronikschaltung durchfließenden Ruhestromes, um bei einer Veränderung des Ruhestromes die Netzwerkkommunikation zu unterbrechen.

Dabei führt eine getrennte Netzwerkverbindung zu sofortiger Verbindungsunterbrechung des entsprechenden Netzwerk-Ports oder Netzwerkkabels und somit der Netzwerkstrecke. Das Lösen der Netzwerkverbindung kann sowohl reversibel als auch irreversibel ausgeführt werden.

Während bei der Erfindung die Ruhestromüberwachung als separate Leitung außerhalb der LAN-Schnittstelle ausgeführt ist, wie aus dem Verdrahtungsschema auf Seite 6 der Firmendruckschrift gemäß D1 auf Seite 6 hervorgeht, ist dies bei der Erfindung nicht der Fall.

Das Netzwerkmodul ist beliebig skalierbar. So kann das Netzwerkmodul nur einige wenige, beispielsweise 4 Netzwerk-Ports aufweisen, wodurch das Netzwerkmodul vergleichsweise kompakt ausgeführt werden kann. Auch kann das Netzwerkmodul eine Vielzahl an Netzwerk-Ports aufweisen, beispielsweise 5, 10 oder noch mehr Netzwerk-Ports. Hierdurch ist auch eine Überwachung komplexer Netzwerke möglich.

Weitere vorteilhafte Ausgestaltungen des erfindungsgemäßen Netzwerkmoduls und des Netzwerks ergeben sich auch aus den Ausführungsbeispielen, welche nachfolgend unter Bezugnahme auf die Figuren näher beschrieben werden.

Dabei zeigen:
Fig. 1 Eine schematische Darstellung eines Netzwerks; und
Fig. 2 Eine schematische Darstellung eines erfindungsgemäßen Netzwerkmoduls.

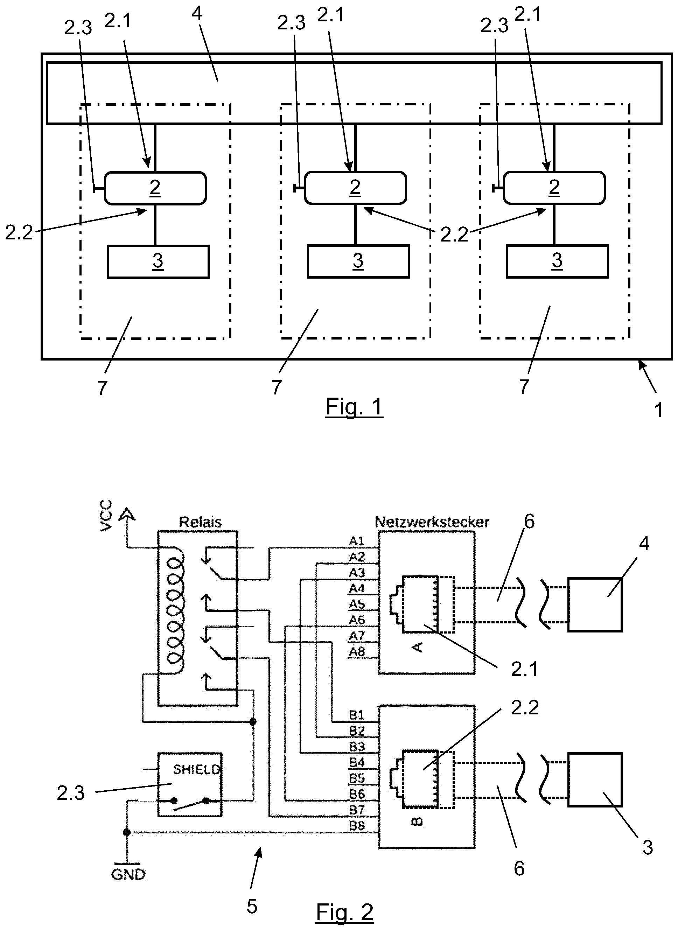

Figur 1 zeigt eine Installation eines Schutzes vor unerwünschtem Netzwerkzugriff eines *Local Area Networks* 1. Der Schutz ist durch einfaches Zwischenschalten eines erfindungsgemäßen Netzwerkmodules 2 in eine Netzwerkstrecke 7 zwischen Netzwerkteilnehmer 3, beispielsweise einem PC, und Ursprungsanschluss 4, beispielsweise einem Switch, möglich. Dabei lässt sich das Netzwerkmodul 2 ohne mechanische Arbeiten zwischen die Netzwerkverbindung installieren. Hierzu weist das Netzwerkmodul 2 wenigstens einen Eingangs-Port 2.1 und einen Ausgangs-Port 2.2 auf. Ferner ist ein Taster 2.3 am Netzwerkmodul 2 vorgesehen. Das Vorsehen separater Sabotageschleifen, mit deren Hilfe beispielsweise ein unerlaubtes Öffnen einer Tür eines Netzwerkschranks überwacht werden kann, ist nicht erforderlich.

Grundsätzlich wird bei Netzwerkgeräten die Elektronik mittels HF Koppler galvanisch zu den Kabeln getrennt. So sind zum einen die Bauteile hinter dem Koppler vor Überspannungen geschützt, zum anderen kann Power-Over-Ethernet (POE) mittels einer Phantomspeisung zum Verbraucher gelangen, ohne die Netzwerkkommunikation zu stören. Das Netzwerkmodul 2 überwacht ebenfalls einen regulären Netzwerkbetrieb auf der niedrigsten OSI-Schicht (physical layer). Somit können Täuschungen von MAC Adressen und/oder IP Adressen ausgeschlossen werden.

Anhand von Figur 2 wird das Funktionsprinzip einer vom Netzwerkmodul 2 umfassten Elektronikschaltung 5 näher erläutert. Für 100 mBit Netzwerkverbindungen werden die Adernpaare A1+A2 und A3+A6 verwendet. A4+A5 und A7+A8 sind ungenutzt und werden für POE oder Gigabit Netzwerke verwendet. Bei verbundenem Netzwerkkabel 6 besteht wegen des HF-Kopplers also für Gleichstrom eine elektrische Verbindung zwischen beispielsweise Adernpaar A7+A8. Diese elektrische Verbindung wird dazu verwendet, im Netzwerkmodul 2 eine Ruhestromüberwachung der Netzwerkleitung zu realisieren. Wird das Netzwerkkabel 6 abgezogen, wird die Ruhestromschleife durchtrennt. In der Folge wird die Netzwerkverbindung zwischen dem Netzwerkteilnehmer 3 und dem Ursprungsanschluss 4 unterbrochen. Eine erneute Aktivierung der Netzwerkstrecke 7 am Netzwerkmodul 2 durch ein Schaltereignis lässt eine neue Netzwerkkommunikation zu.

## Patentansprüche

1. Netzwerkmodul (2) mit zumindest einem Eingangs-Port (2.1), einem Ausgangs-Port (2.2) und wenigstens einer Elektronikschaltung (5), wobei die Elektronikschaltung (5) dazu eingerichtet ist eine Netzwerkkommunikation zwischen Eingangs- und Ausgangsport (2.1, 2.2) zu unterbrechen,
**gekennzeichnet durch** die folgenden Merkmale:
die Elektronikschaltung (5) ist zumindest zwischen einen Eingangs- und Ausgangsport (2.1, 2.2) zwischengeschaltet und eingerichtet für das Überwachen eines die Elektronikschaltung (5) durchfließenden Ruhestroms, um bei einer Veränderung des Ruhestroms die Netzwerkkommunikation zu unterbrechen;
ein von der Elektronikschaltung (5) ausgebildeter Stromkreis verläuft abschnittsweise durch ein an einen Eingangs-Port (2.1) oder einen Ausgangs-Port (2.2) angeschlossenes Netzwerkkabel (6);
der ausgebildete Stromkreis ist derart gestaltet, dass er im Netzwerkmodul (2) eine Ruhestromüberwachung der Netzwerkleitung realisiert.

2. Netzwerkmodul (2) nach Anspruch 1,
**gekennzeichnet durch**
wenigstens einen mit der Elektronikschaltung (5) gekoppelten Taster (2.3), potenzialfreien Kontakt und/oder Stell-Relais, wobei der Taster (2.3), der Kontakt und/oder das Stell-Relais dazu eingerichtet ist durch Empfangen eines Stellsignals eine zwischen dem Eingangs- und Ausgangsport (2.1, 2.2) unterbrochene Netzwerkkommunikation wiederherzustellen.

3. Netzwerk aus wenigstens zwei über eine Kabelverbindung kommunizierenden Teilnehmern,
**dadurch gekennzeichnet, dass**
wenigstens ein Netzwerkmodul (2) nach einem der Ansprüche 1 bis 4 an eine beliebige Stelle der Kabelverbindung zwischen die Teilnehmer geschaltet ist, wobei eine Netzwerkkommunikation zwischen den Teilnehmern über das Netzwerkmodul (2) läuft.
